# EUROPEAN PATENT APPLICATION

(11) **EP 2 425 701 A2**
(43) Date of publication of application: **07.03.2012**
(21) Application number: 11179199.2
(22) Date of filing: 29.08.2011
(51) Int. Cl.: A01D 34/00, A01D 34/74

(54) **Autonomously operating lawnmower having a height adjustment device and method for controlling/regulating the cutting height of an autonomously driving lawnmower**

(30) Priority: 02.09.2010 DE 102010044275
(71) Applicant: GGP Italy S.p.A., 31033 Castelfranco Veneto (TV) (IT)
(72) Inventor: Villanova, Marco, 31020 Sernaglia della Battaglia (TV) (IT)
(74) Representative: Mittler, Enrico

(57) **Abstract**

The invention relates to an autonomously operating lawnmower (1) comprising at least one electric motor (24) for driving at least one cutting system (21), and a measuring device for establishing the power consumption of the electric motor (24).

The invention is characterized in that the cutting system (21) comprises at least one cutting device revolving around a vertical axis and a height adjustment device for the cutting device for adjusting the cutting height as a function of the power consumed by the electric motor, in particular during starting of the autonomously operating lawnmower.

## Description

The invention relates to an autonomously operating lawnmower comprising at least one electric motor for driving at least one cutting system and a measuring device for determining the power consumption of the electric motor. Furthermore, the invention relates to a system having an autonomously driving lawnmower and a charging station as well as a method for controlling/regulating the cutting height of an autonomously driving lawnmower.

Self-propelled lawnmowers have become known from a plurality of applications. For example, US 4,887,415, EP 0 550 473 A, US 3,550,714, DE 199 32 552, US 6,650,975, EP 1 488 296, and EP 1 495 661 disclose such self-propelled lawnmowers. In addition, a self-propelled lawnmower is known from WO 2007/140930 or DE 10 2006 027 018, which comprises a cutting spindle as a cutting device.

Such a lawnmower has the advantage that large widths may be cut using a cutting spindle, however, because of the cutting gap, the cutting spindle tends to jam during mowing as a result of branches and similar items, for example.

In order to detect such a case of jamming, in the above-mentioned WO 2007/140930 or DE 10 2006 027 018, it is provided that the power consumption of the electric motor which drives the cutting spindle is recorded and such a case of jamming is detected on the basis of the power consumption.

The startup of the mower according to WO 2007/140930 or DE 10 2006 027 018 is performed by slowly increasing the speed of the spindle from a standstill to the operating speed of approximately 500 to 1000 rpm.

Furthermore, a shutdown mechanism for a lawnmower, in particular an autonomously driving lawnmower, as well as a charging station for such a lawnmower, are known from DE 10 2008 038 199. The charging station according to DE 10 2008 038 199 is distinguished in that a linkage having a boom is provided. The contacts were situated adjacent to one another in the travel direction on the autonomously driving lawnmower according to DE 10 2008 038 199, which would result in a large space requirement.

The object of the invention according to a first aspect is to provide an autonomously operating lawnmower, which has a cutting blade revolving around a vertical axis as a cutting system and starts reliably even in high grass. On the other hand, the power consumption of such an autonomously operating lawnmower is also to be minimized.

According to a second aspect of the invention, a system of an autonomous lawnmower having a simply constructed charging station is to be provided.

The first aspect of the invention is achieved by an autonomously operating lawnmower having an electric motor for driving at least one cutting system and a measuring device for determining the power consumption of the electric motor, the autonomously operating lawnmower being distinguished in that the cutting system has at least one cutting device, which revolves around a vertical axis, having at least one cutting blade and a height adjustment device for the cutting device for setting the cutting height as a function of the power consumed by the electric motor, in particular during starting of the autonomously operating lawnmower.

Through such a lawnmower, a simplified construction is implemented in relation to a spindle mower and the disadvantages of a spindle mower, in particular the jammed cutting spindle and the complex production of the cutting spindle, are avoided. The disadvantage of an autonomously operating mower having a cutting device rotating around a vertical axis having at least one cutting blade, namely that the starting of the system requires a high power consumption, in particular in high grass, is avoided by the system according to the invention of power detection and an adjustment device connected thereto.

In a particularly simple design of the invention, the electric motor is coupled to the cutting device via a shaft. The spacing of electric motor and cutting blade is always equal. In order to be able to set the height, the electric motor and the cutting device coupled to the electric motor are situated in a receptacle. The height adjustment device comprises this receptacle and at least one bearing axis, using which the receptacle can be adjusted in height relative to a chassis or frame of the autonomously driving lawnmower.

It is thus possible to perform a height adjustment of the cutting device and thus a cutting height setting in a relatively simple manner. In particular, such a design allows the height adjustment device to be able to be set using a lever device both mechanically and also electrically, for example.

For example, to start the mower, the cutting device could always be adjusted using the lever in such a manner that the cutting device has the greatest possible spacing to the material to be cut, in particular to the grass here, whereby starting of the autonomously operating lawnmower is made possible in a simple manner. Of course, electrical raising via the above-mentioned lever device would also be possible.

However, using the device according to the invention, it is not only possible to put an autonomously operating lawnmower having a cutting device, which revolves around an essentially vertical axis, having a cutting blade into operation in a simple manner, but rather also during operation to provide an optimum power consumption of the electric motor in running mowing operation. This is significant in particular when the electric motor of the autonomously driving lawnmower is supplied with current from a storage device, such as a battery.

In order to also perform optimum height setting of the cutting device having cutting blade in running operation, it is provided that the autonomously driving lawnmower has a control and/or regulating unit, which adjusts the cutting height of the cutting device as a function of the detected power signal during operation.

In addition to the autonomously driving lawnmower, the invention also provides a system having such an autonomously driving lawnmower, the system also having, in addition to the autonomously driving lawnmower, a charging station for charging the storage device of the autonomously driving lawnmower.

In order to be able to charge the autonomously driving lawnmower with current in a charging station, in the preferred design of the autonomously driving lawnmower, two contact surfaces are situated running essentially transversely to the travel direction of the autonomously driving lawnmower. The charging station of the system preferably comprises a linkage having a boom on which contact means are situated for the contact surfaces of the autonomously driving lawnmower.

In order to also ensure reliable charging of the storage device in the case of an inclined autonomously driving lawnmower, it is provided according to the second aspect of the invention that the contact means situated on the linkage are situated so they are displaceable, for example, in a guide for orientation of the contact surfaces of the autonomously driving lawnmower. With the aid of such a guide, which can be supported by spring force, it is possible that contact means are always pressed securely against the contact surfaces even if the autonomously driving lawnmower is inclined.

In addition to the autonomously driving lawnmower and the system having charging station, the invention also provides a method for controlling/regulating the cutting height of an autonomously driving lawnmower in running operation. For this purpose, a value for the power consumption of the electric motor is established with the aid of a measuring device and if the established value exceeds a limiting value, the cutting height of the cutting device is changed by moving the cutting device so that a standard value of the power consumption is provided. The limiting value from which the cutting height is set is three times, in particular twice the standard value of the power consumption. The standard value of the power consumption is preferably in the range of a power consumption of 1 A to 2 A. Accordingly, the limiting value is preferably at a power consumption of 2 A to 6 A, very particularly preferably between 3 A and 4 A.

In addition to the method for controlling/regulating the cutting height in running operation, the invention provides a method for putting the autonomously driving lawnmower into operation. In this method for putting into operation, the power consumption of the electric motor is also ascertained. If the power consumption exceeds an established limiting value, the cutting device is raised with the aid of the height adjustment device, so that the power consumption is now significantly decreased.

The invention is described in greater detail hereafter on the basis of the exemplary embodiments without restriction thereto.

In the figures:
Figure 1a shows a side view of an autonomously driving lawnmower according to the invention,
Figure 1b shows the profile of a wheel in a side view,
Figure 2 shows a top view of an autonomously driving lawnmower according to the invention,
Figure 3 shows a rear view of a lawnmower according to the invention,
Figures 4a-c shows a charging station for a lawnmower according to the invention,

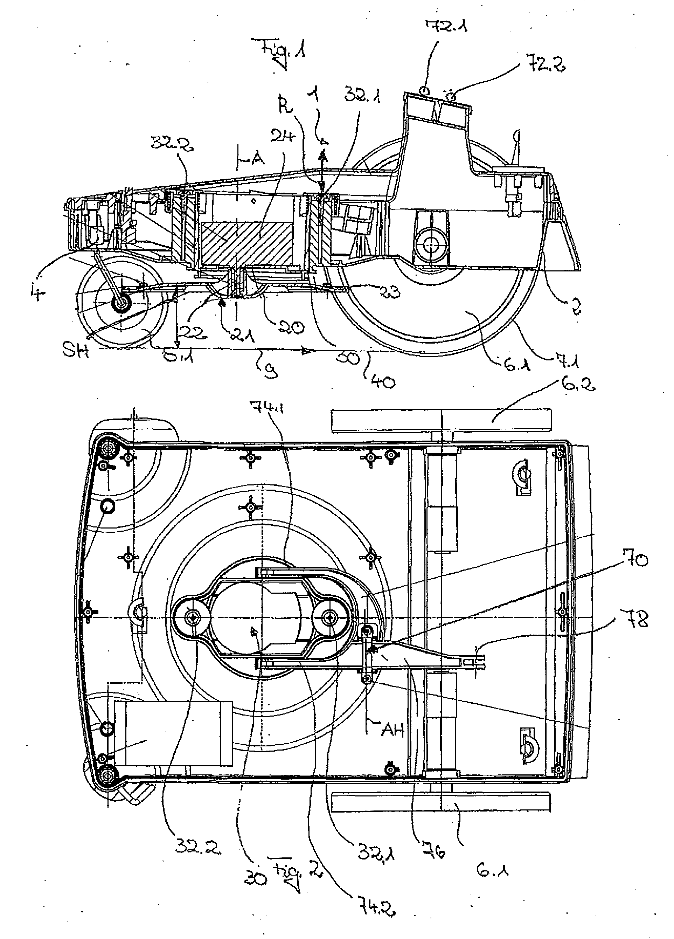

Figure 1a shows a side view of a self-propelled lawnmower.

The self-propelled lawnmower 1 comprises a frame or a chassis 2. The frame is essentially held together by crossbeams (not shown).

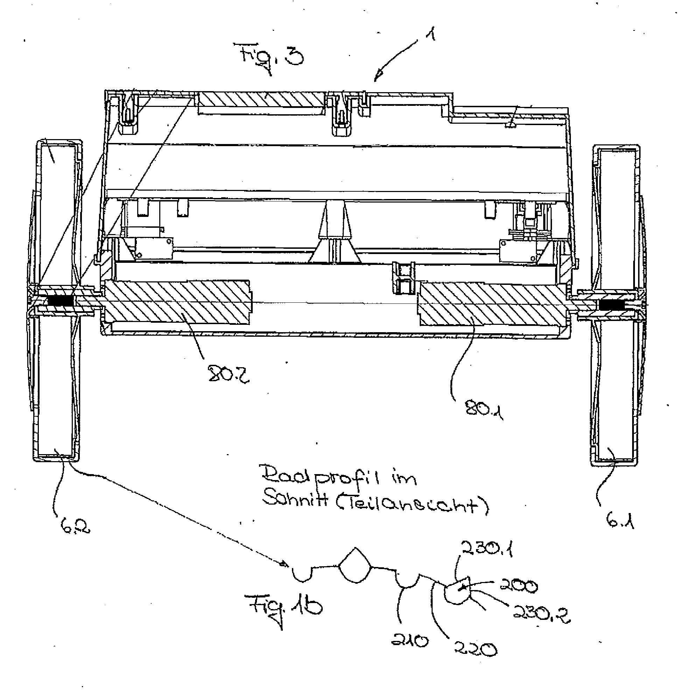

The electronic components 4, in particular the control electronics and/or the measuring device for the power consumption, are housed in the chassis. In addition, the storage devices (not shown) may be situated on the frame parts of the frame. The storage devices are preferably battery cells. The battery cells particularly also supply, in addition to the drive motor for the cutting blade, the two drive motors (see Figure 3) of the drive wheels of the self-propelled lawnmower 1. The drive motors each drive one drive wheel. Only one drive wheel 6.1 is shown of the drive wheels. The drive wheel 6.1 has a rubber tire 7.1, which is distinguished by a special nonslip profile and is made of a thermoplastic elastomer (TPE) or PVC. Figure 1b shows a side view of such a profile. The nonslip profile is provided in particular by protrusions 200 and depressions 210, which are attached or introduced in the direction of the tire width, i.e., perpendicularly to the tire circumference 220. Protrusions 200 and depressions 210 are situated alternately over half of the tire width. The entire tire circumference has such profiling. The form of the protrusion 200 is particularly advantageous. As Figure 1b shows, each protrusion has inclined edges 230.1, 230.2 in section. This has the result that dirt is automatically repelled. The wheel profile thus results in a type of self-cleaning.

In addition to the drive wheels, guide wheels are also provided. One wheel, the guide wheel 5.1, is again shown of the guide wheels in the side view. The travel direction of the self-propelled lawnmower is in the direction of the arrow 9 shown, for example. The battery cells (not shown) are preferably situated over the drive wheel 6.1, which has the result that even when climbing a hill, sufficient traction of the autonomously operating lawnmower 1 is provided. The autonomous self-propelled mower according to the invention comprises a cutting device 21, revolving essentially around an axis A running perpendicularly to the frame, comprising a blade carrier 20 having at least one cutting blade 23, according to the invention. The blade carrier 20 is coupled via a shaft 22 to an electric motor 24, which drives the blade carrier and thus the blade. The electric motor 24 is supplied with current from the battery cell (not shown).

The electric motor is suspended in a suspension or receptacle 30 together with the blade carrier and the cutter blades. The suspension 30 is in turn suspended using two bearing axles 32.1, 32.2 so it is displaceable in the direction R on the frame 2. The cutting height SH of the cutting device relative to the ground 40 can be set by displacing the receptacle 30 in the direction R via the bearing axles 32.1, 32.2.

The bearing axles can be raised in the direction R or lowered in the opposite direction via a lever device 70 shown in Figure 2.

The power required by the motor 24 to drive the cutting device 21 is detected in a measuring device (not shown), for example, and displayed, for example, so that the cutting height can be adjusted mechanically, or fed to electronics (not shown), with the aid of which raising or lowering of the electric motor 24 having cutting device 21 can be performed automatically. Furthermore, Figure 1 shows the contact surfaces 72.1, 72.2, which are adjacent to one another in the travel direction and using which the battery cells (not shown) may be recharged.

The above-described motorized height adjustment allows the cutting height SH to be set via a motorized drive in running operation as a function of the recorded power signal. In this manner, optimum power consumption can always be ensured. The height setting when putting the autonomously driving lawnmower into operation is very particularly advantageous.

The motors for the drive wheels 6.1, 6.2 can also be driven and/or regulated using the electronics of the electric motor 24 for the cutting device 20. The regulated drive of the drive wheels ensures that a controlled movement of the self-propelled autonomous lawnmower on the lawn surface to be cut is made possible. In addition to a controlled movement, the self-propelled robot could also be regulated so that it performs a so-called random walk, i.e., a random movement.

Figure 2 shows a top view of a mower according to the invention. The suspension or receptacle 30 for the electric motor and the cutting device as well as the lever device 70, using which the suspension 30 can be raised in the direction R and/or lowered for the cutting height setting, are clearly shown in Figure 2.

The two bearing axles 32.1, 32.2 and the lever 70, which is fastened using two arms 74.1, 74.2 on the receptacle 30 and around which the axle AH is pivotable upward and downward, so that the suspension 30 having the cutting device and the electric motor can be raised or lowered for height adjustment, are clearly shown.

The rotational movement around the axis AH of the lever is either performed mechanically by actuating the actuating lever 76 or using an electric motor, which engages on the actuating lever 76 at the position 78.

A rear view of the mower 1 according to the invention is shown in Figure 3. The two drive wheels 6.1, 6.2 and the electric motors 80.1, 80.2 assigned to the respective drive wheel 6.1, 6.2 are clearly shown.

As described above, a controlled movement of the autonomously driving lawnmower is achieved by a regulated activation of the drive motors 80.1, 80.2, which are also in turn powered by the storage device, in particular the battery cell.

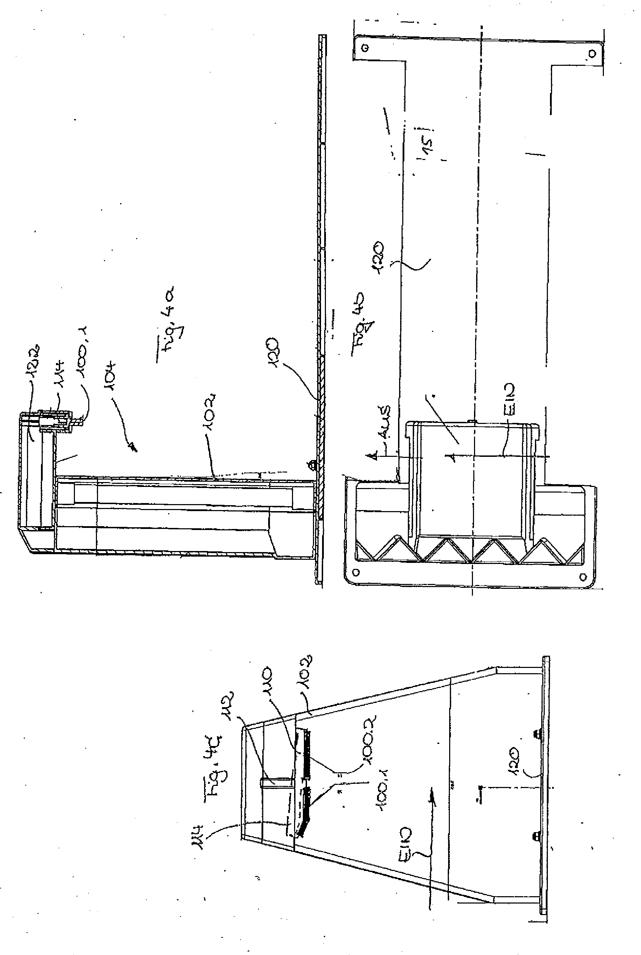

In addition to the autonomously driving lawnmower having a device for height adjustment, a system is also provided according to the invention, which comprises an autonomously driving lawnmower, in particular according to the description of Figures 1-3, and a charging station as shown in Figures 4a-c. The charging station according to Figures 4a-c is distinguished in that it has contact means 100.1, 100.2, which are situated on a linkage 102. The autonomously driving lawnmower (not shown), can drive through the charging station and only stops for a charging procedure in the area of the contact means.

Figure 4a shows a top view of the charging station having linkage 102 and ground plate 120.

In order to make the charging station 104 independent of the position of the autonomously driving lawnmower relative to the contact means, it is provided that the contact means are situated so they are movable. This is particularly also visible in the side view in Figure 4c. In Figure 4c, the two contact means 100.1, 100.2 are shown, which form an electrical contact for charging the battery cells, for example, with the contact surfaces 72.1, 72.2, which are situated one behind another in the travel direction of the autonomous lawnmower. In the present exemplary embodiment, the contact means 100.1, 100.2 are also implemented as contact surfaces of a contact bow 110. The contact bow 110 is suspended so it is movable in a guide groove 112. In particular, the contact bow 110 can also incline into the location 114 shown by dot-dash lines, for example. In this way it is possible, for example, that the contact means 100.1, 100.2 adapt to an inclination of the autonomously driving lawnmower and good contact of the contact means 100.1, 100.2 to the contact surfaces 72.1, 72.2, which are attached to the autonomously driving lawnmower 1, is always provided. The drive-in direction of the autonomously driving lawnmower is identified by IN, and the drive-out direction by OUT. The contact bow 110 is beveled in the drive-in area, in order to guide the contact surfaces 72.1, 72.2 to the contact means 100.1, 100.2.

Figure 4a shows a frontal view of the charging station, and Figure 4c shows a top view. Identical components are all identified with the same reference numerals in Figures 4a to 4c. The linkage 102 of the charging station is installed so it is settable on the ground plate 120. The very narrow implementation of the contact means 100.1 is recognizable from Figure 4a, which is made possible by situating them one behind another in the travel direction.

Using the charging station according to the invention, it is possible that even if the autonomously driving lawnmower is inclined in relation to the ground, the contact surfaces situated one behind another in the travel direction on the autonomously driving lawnmower securely come into contact with the contact means.

Through such a design it is possible to implement the boom 122 of the linkage as narrower in relation to the charging station described in DE 10 2008 038 199, for example. Reliable supply is achieved in spite of the substantially narrower construction of the charging station according to the invention.

Furthermore, the ground plate can be implemented substantially shorter than in the prior art, the drive wheels also being able to be located outside the ground plate, since possible inclinations of the autonomously driving lawnmower are compensated for by the movable contact means.

Using the specified measures on the self propelled lawnmower and on the charging station it is thus possible for the first time to provide a self-propelled lawnmower which is distinguished by a low power consumption and thus to provide longer operating time than self-propelled lawnmowers according to the prior art. Furthermore, the system can be put into operation in a very simple manner, since the cutting blade, which is situated and mounted essentially perpendicularly to the housing, is raised enough when the mower is put into operation that the cutting device can be started using a low power consumption.

## Claims

1. An autonomously operating lawnmower (1) comprising at least one electric motor (24) for driving at least one cutting system, as well as a measuring device for establishing the power consumption of the electric motor (24), **characterized in that** the cutting system comprises at least one cutting device (21), which revolves around a vertical axis (A), and a height adjustment device for the cutting device (21) for setting the cutting height (SH) as a function of the power consumed by the electric motor (24), in particular during starting of the autonomously operating lawnmower.

2. The autonomously operating lawnmower according to Claim 1, **characterized in that** the electric motor (24) is coupled via a shaft (22) to a blade carrier (20) of the cutting device (21) and the height adjustment device comprises a receptacle (30) for electric motor (24) and cutting device (21) as well as at least one bearing axle (32.1, 32.2) for the height adjustment of the receptacle relative to a chassis (2) or frame of the autonomously driving lawnmower (1).

3. The autonomously operating lawnmower according to one of Claims 1-2, **characterized in that** the height adjustment device is coupled to a lever device (70) or height setting.

4. The autonomously operating lawnmower according to Claim 3, **characterized in that** the lever device (70) is actuated mechanically and/or using a further electric motor.

5. The autonomously operating lawnmower according to one of Claims 1-4, **characterized in that** the autonomously driving lawnmower (1) comprises a control and/or regulating device, which sets the cutting height (SH) of the cutting device (21) as a function of a power signal detected by the measuring device.

6. A system having an autonomously operating lawnmower, in particular an autonomously driving lawnmower according to one of Claims 1-5, **characterized in that** the autonomously driving lawnmower has two contact surfaces (72.1, 72.2), which run essentially transversely to a travel direction (9) of the autonomously driving lawnmower.

7. The system according to Claim 6, **characterized in that** the system has a charging station (104) for the autonomously driving lawnmower (1), the charging station (104) comprising a linkage (102) having a boom (122) having contact means (100.1, 100.2) for the contact surfaces (72.1, 72.2) of the autonomously driving lawnmower and the contact means (100.1, 100.2) being situated so they are displaceable on the linkage, so that the contact means (100.1, 100.2) orient themselves to the contact surfaces (72.1, 72.2) of the autonomously driving lawnmower.

8. A method for controlling/regulating the cutting height of an autonomously driving lawnmower (1) in running operation having a cutting system having a vertically revolving cutting device (21) having at least one cutting blade (20) having a height adjustment device for the cutting device (21) and a measuring device for the power consumption of an electric motor (24) for driving the cutting device, comprising the following steps:
- a value for the power consumption of the electric motor (24) is established with the aid of the measuring device,
- if the value exceeds a limiting value, the height adjustment device for the cutting device (20) is activated in such a manner that the cutting height (SH) is changed so that the power consumption reaches a standard value.

9. A method for putting an autonomously driving lawnmower (1) into operation, having a cutting system having a vertically revolving cutting device (21) having at least one cutting blade having a height adjustment device for the cutting device and a measuring device for the power consumption of the electric motor (24) for driving the cutting device, comprising the following steps:
- when the cutting device (21) of the autonomously driving lawnmower is started or turned on, the power consumption of the electric motor (24) is established with the aid of the measuring device,
- if the value exceeds a limiting value, when the autonomously driving lawnmower is put into operation, the height adjustment device is activated in such a manner that the cutting height (SH) of the cutting device (21) is set to a maximum cutting height.
